# EUROPÄISCHE PATENTSCHRIFT

(11) **EP 1 757 182 B1**
(45) Veröffentlichungstag und Bekanntmachung des Hinweises auf die Patenterteilung: **19.11.2008**
(21) Anmeldenummer: 06117577.4
(22) Anmeldetag: 20.07.2006
(51) Int. Cl.: A01D 89/00

(54) **Landwirtschaftliche Presse**
Press for agriculture
Presse agricole

(30) Priorität: 25.08.2005 DE 102005040174
(43) Veröffentlichungstag der Anmeldung: 28.02.2007
(73) Patentinhaber: Deere & Company, Moline, IL 61265-8098 (US)
(72) Erfinder: Viaud, Jean, 70100 Gray (FR)
(74) Vertreter: Magin, Ludwig Bernhard

(56) Entgegenhaltungen:
- EP-A1- 1 208 738
- DE-A1- 10 212 722
- FR-A1- 2 369 790

## Beschreibung

Die Erfindung betrifft eine landwirtschaftliche Presse mit den Merkmalen des Oberbegriffes des Anspruchs 1. Sollch eine Presse ist zur der FR-A-2369790 bekannt.

Pressen, insbesondere Rundballenpressen heutiger Bauweise (WO-A1-98/17096) sind mit Aufnehmern, sogenannten Pick-Ups versehen, die möglichst breite Schwade aufnehmen sollen, damit eine hohe Erntekapazität erreicht wird. Damit der Aufnehmer stets einen bestimmten Abstand zum Boden einhält, sind Stützräder an ihm vorgesehen.

Aus der US-A-4 838 015 ist eine Rundballenpresse bekannt, bei der eine Anpassung der Aufnehmerstellung durch das Anheben bzw. Absenken von Lenkern einer Zweipunktkupplung im rückwärtigen Bereich eines Ackerschleppers erzielt wird. Insbesondere bei den heutigen hohen Geschwindigkeiten beim Pressen erscheint es unmöglich, dass eine Bedienungsperson ständig beim Fahren nach hinten schaut, ob der Aufnehmer den richtigen Abstand zum Boden einnimmt.

Die EP A 1 208 738 offenbart ebenfalls eine Rundballenpresse nun allerdings mit Sensoren, die den Abstand zwischen dem Aufnehmer und dem Boden ermitteln und den Aufnehmer abhängig von dem ermittelten Abstand nach oben oder unten bewegen. Bei dieser Lösung ändert sich die relative Lage zwischen dem Aufnehmer und einem nachgeschalteten Förderrotor bzw. dem zu ihm führenden Förderkanal.

Schließlich geht aus der FR A 2 546 368 eine Rundballenpresse hervor, bei der der gesamte Rahmen von einer Bedienungsperson auf einem Ackerschlepper hydraulisch angehoben wird, um die richtige Arbeitshöhe des Aufnehmers einzuhalten. Der Aufnehmer ist gegenüber dem Rahmen der Presse nicht verstellbar.

Das der Erfindung zugrunde liegende Problem wird darin gesehen, dass es zu Materialflußproblemen stromabwärts des Aufnehmers kommen kann, wenn die Stellung des Aufnehmers aufgrund starker Änderungen der Bodenhöhe zu sehr variiert. Dies resultiert daher, dass die Stützräder den Aufnehmer verstellen, während der Rahmen der Presse, an dem der Aufnehmer aufgehängt ist, in seiner Stellung verharrt. In anderen Fällen, in denen nicht der Aufnehmer, sondern die Lage der gesamten Presse verändert wird, ist die Steuerung zu ungenau, zumal sie von der Aufmerksamkeit einer Bedienungsperson abhängt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird nicht die Stellung des Aufnehmers zur Anpassung an die Bodenunebenheit geändert, sondern die Stellung der Presse insgesamt, so dass die in ihr herrschenden räumlichen Verhältnisse konstant bleiben und es keine Auswirkungen auf den Gutfluss gibt. Die Verwendung eines Sensors und einer Stelleinrichtung verhindern, dass die Verstellung von den Fähigkeiten einer Bedienungsperson abhängen, und schließlich sorgt die Anordnung des Sensors im Bereich des Aufnehmers dafür, dass es zu einer zeitgenauen Signalermittlung kommt - nicht zu früh und nicht zu spät.

Das Stellsignal kann aus einer Vielzahl von Arten von Sensoren abgeleitet werden; berührungslose Sensoren haben jedoch den Vorteil erhöhter Unempfindlichkeit in Umgebungen, wie sie bei Landmaschinen herrschen. Derartige Sensoren können sowohl zwischen dem Rahmen und dem Aufnehmer, als auch zwischen dem Aufnehmer und dem Boden verwendet werden. Die Verwendung eines berührungslosen Sensors, z.B. eines Hochfrequenz- oder Ultraschallsensors, bewirkt, dass deren Ersatz des Stützrades keine Fangstelle für Erntegut bietet. Außerdem liefert der berührungslose Sensor auch dann ein korrektes Signal, wenn der Boden leicht nachgibt und das Stützrad bei hohem Gewicht des Aufnehmers einsinken würde.

Ein sich auf dem Boden abstützender Sensor hat den Vorteil, dass auf elektrische Wellensignale verzichtet wird, die unter ungünstigen Verhältnissen Messfehler hervorbringen können, z.B. wenn der Boden mit Unkraut bewachsen ist oder dergleichen.

Eine Anordnung eines oder mehrerer Sensoren unterhalb des Aufnehmers, d.h. innerhalb seiner Umfassung bietet Schutz gegen äußere mechanische Einflüsse auf den Sensor. Der Sensor kann aber auch voreilen und die Lage des Aufnehmers beim Überqueren einer kleinen Mulde stabil halten, da er diese im Voraus erkennt. In dem Fall, dass der Sensor oder die Sensoren vor dem Aufnehmer angebracht sind, geschieht dies vorteilhafterweise mittels eines oder mehrerer auskragender Arme oberhalb des Aufnehmers.

Wenn der Sensor zwischen dem Aufnehmer und dem Rahmen der Presse vorgesehen ist, kann der Aufnehmer mittels Stützrädern oder dergleichen Stützelementen dem Boden folgen und daraus in Bezug auf den Rahmen der Presse ein Signal bilden. Da der Verstellweg relative gering ist und der Bereich des Sensors aufgrund seiner geringen Größe geschützt werden kann, wird zudem eine geringe Störanfälligkeit erzielt.

Während grundsätzlich z.B. auch Hallsensoren oder mechanische Sensoren verwendbar sind, stellen Sensoren mit einem Potentiometer zum Bestimmen einer relativen Stellung zwischen sich und dem Aufnehmer eine sehr genaue Art der Messung dar, die auch leicht in die Stelleinrichtung eingespeist werden kann.

Eine Ausgestaltung derart, dass über die Breite des Aufnehmers mehrere Sensoren vorgesehen sind, hat zur Folge, dass nicht die Höhenänderung an einer einzigen Stelle, sondern an mehreren Stellen über der Breite des Aufnehmers erfasst und daraus ein brauchbarer Mittelwert oder Extremwert gebildet werden kann.

Stellvorrichtungen mit elektrischem oder hydraulischem Antrieb arbeiten schnell und können mit hohen Kräften betrieben werden. Hydraulische Steuerungen oder Regelungen enthalten regelmäßig elektromagnetisch gesteuerte Ventile, mit denen schnelle und geringste Stellbewegungen erzeugt werden können.

Um zu viele Schaltvorgänge zu vermeiden, macht es Sinn, wenn ein Bereich definiert und in der Signalverarbeitungsvorrichtung hinterlegt wird, innerhalb dessen sich die Stellung des Aufnehmers gegenüber dem Rahmen und somit gegenüber einem nachfolgenden Förderorgan verstellen kann, ohne dass eine Stellungskorrektur erforderlich würde. Vorzugsweise ist ein solcher Toleranzbereich veränderbar, um auf die unterschiedlichen Gut- oder Arbeitsbedingungen eingehen zu können.

Zur Verringerung der Kosten, der Steuerung bzw. Regelung und des Bauaufwands, reicht es aus, die Stellvorrichtung nur in einer Richtung aktiv wirksam sein zu lassen, während in der anderen Richtung die Schwerkraft genutzt wird. Erforderlichenfalls kann auch mittels einer mechanischen oder pneumatischen Feder eine Stellkraft erzeugt werden.

Eine vertikale Schwenkbarkeit des Aufnehmers um eine im Wesentlichen quer zu der Fahrtrichtung der Presse verlaufende horizontale Achse hat den Vorteil, dass der Aufnehmer zunächst in Grenzen schwenkbar ist, ohne dass ein korrigierender Stellvorgang eingeleitet werden muß. Diese Schwenklagerung macht es zudem möglich, den Aufnehmer in eine Transportstellung anzuheben, ohne dass die Presse selbst mittels der Deichsel in eine andere Stellung gebracht wird.

Eine starre Anordnung des Aufnehmers an dem Rahmen der Presse vermeidet Kosten für eine ansonsten vorhandene Höheneinstellvorrichtung. Die Einstellung der Aufnahmehöhe des Aufnehmers erfolgt in diesem Fall über die Stellvorrichtung.

Mittels einer Deaktivierungsvorrichtung zum Deaktivieren der Signalverarbeitungsvorrichtung bzw. der Stelleinrichtung wenn der Aufnehmer eine vorbestimmte Stellung eingenommen hat, wird vermieden, dass der Aufnehmer aufgrund von Signalen zu der Bodenkontur verstellt wird, ohne dass dies zu diesem Zeitpunkt erwünscht ist, z.B. während Transportfahrten.

In der Zeichnung ist ein nachfolgend näher beschriebenes Ausführungsbeispiel der Erfindung dargestellt. Es zeigt:
- Figur 1: eine Presse an einem Zugfahrzeug in Seitenansicht und schematischer Darstellung auf ebener Aufstandsfläche,
- Figur 2: das Gespann nach Figur 1, wobei sich das Zugfahrzeug auf einem höheren Niveau befindet als die Presse und deren Aufnehmer, und
- Figur 3: das Gespann nach Figur 1, wobei sich das Zugfahrzeug und der Aufnehmer auf einem höheren Niveau befinden als die Presse.

Eine Presse 10 gemäß der Zeichnung ist mit einem Rahmen 12, einem Ballenpreßraum 14, Rädern 16, einer Deichsel 18 und einem Aufnehmer 20 versehen und wird von einem Zugfahrzeug 22 gezogen.

Die Presse 10 ist in dem dargestellten Ausführungsbeispiel als eine Rundballenpresse mit einem Ballenpressraum 14 veränderlicher Größe ausgebildet; statt dessen könnte auch eine andere Art einer Presse, z.B. eine Rundballenpresse mit konstant großem Ballenpressraum, eine Quaderballenpresse, eine Großballenpresse oder dergleichen gezogenes Gerät mit einem Aufnehmer 20 gewählt werden.

Der Rahmen 12 ist als Schweißzusammenbau gebildet und trägt Seitenwände 24, zwischen denen sich Presselemente 26 erstrecken.

Der Ballenpressraum 14 wird seitlich von den Seitenwänden 24 und umfangsseitig von den Presselementen 26 abgeschlossen. Die Presselemente 26 lassen an einer Stelle vorne unten einen Einlaß 28, durch den Erntegut in den Ballenpressraum 14 eingespeist werden kann.

Die Räder 16 stützen den Rahmen 12 bzw. die gesamte Presse 10 auf dem Boden ab.

Die Deichsel 18 stellt eine Verbindung zwischen dem Rahmen 12 und dem Zugfahrzeug 22 her und erstreckt sich oberhalb des Aufnehmers 20. Die Deichsel 18 ist in einem Lager 48 um eine quer zur Fahrtrichtung verlaufende horizontale Achse an dem Rahmen 12 vertikal verschwenkbar angebracht und wird von einer Stellvorrichtung 34 in ihrer Stellung gegenüber dem Rahmen 12 gehalten bzw. verstellt. Die Deichsel 18 greift an dem Zugfahrzeug 22 an einem Zugpendel 44 an, dessen Höhe gegenüber dem Zugfahrzeug 22 nicht veränderbar ist.

Der Aufnehmer 20 ist in der Art einer sogenannten Pick-Up ausgebildet, d.h. mit mehreren Reihen von umlaufenden federnden Zinken 30 versehen, die über den Boden streifen und dabei auf ihm liegendes Erntegut anheben und nach hinten zu dem Einlaß 28 fördern. In der gezeigten, aber nicht erforderlichen Weise kann zwischen dem Aufnehmer 20 und dem Einlaß 28 ein gegebenenfalls als Schneidvorrichtung ausgebildeter Förderrotor 32 vorgesehen sein, was jedoch nicht zwingend ist. Der Aufnehmer 20 ist in bekannter und daher nicht näher dargestellter Weise um ein Lager 50 vertikal schwenkbar an dem Rahmen 12 befestigt. In einem nicht dargestellten Ausführungsbeispiel ist der Aufnehmer 20 starr mit dem Rahmen 12 verbunden. Eine allzu große nach unten gerichtete Bewegung wird durch einen Anschlag 52 begrenzt.

Der Aufnehmer 20 ist mit Stützelementen 54, insbesondere Stützrädern, versehen, die dafür sorgen, dass der Aufnehmer 20 stets einen bestimmten Abstand zum Boden einhält und dessen Höhenänderungen folgt. Die Lage des Aufnehmers 20 soll jeweils so gewählt werden, dass die Zinken 30 mit geringem Abstand über den Boden streichen, was möglichst für die gesamte Breite des Aufnehmers 20 gilt. So soll vermieden werden, dass der Aufnehmer 20 absinkt, wenn er teilweise oder mit der gesamten Breite kurzfristig über eine Mulde oder dergleichen fährt. Andererseits soll der Aufnehmer 20 in eine Außerbetriebsstellung angehoben werden, wenn die Presse 10 eine Transportfahrt unternimmt.

Zur Steuerung oder Regelung des Abstandes zwischen dem Aufnehmer 20 und dem Boden ist in einer Stelleinrichtung 35 eine Steuervorrichtung 36 vorgesehen, zu der ein Sensor 38, eine Signalverarbeitungseinheit 40, eine Eingabeeinheit 42 und verschiedene Verbindungsleitungen gehören, die schließlich auf die Stellvorrichtung 34 einwirken.

Die Stellvorrichtung 34 ist in der einfachsten Bauart als ein einfachwirkender Hydraulikzylinder ausgebildet, der mittels eines nicht gezeigten, aber an sich bekannten Elektromagnetventils gesteuert werden kann. Ein einfachwirkender Hydraulikmotor bzw. -zylinder reicht aus, weil die Bewegung nach unten aufgrund der Schwerkraft eintritt. Allerdings kann mittels eines doppeltwirkenden Hydraulikzylinders die Stellgeschwindigkeit erhöht werden. Anstelle des Hydraulikzylinders könnte auch ein Elektromotor mit Spindelantrieb verwendet werden. Die Stellvorrichtung 34 kann auch unabhängig von der Signalverarbeitungseinheit 40 von dem Zugfahrzeug 22 aus bedient werden, um den Aufnehmer 20 in seine Transportstellung anzuheben und/oder auf den Boden abzusenken.

Die Stellvorrichtung 34 wirkt in dem dargestellten Ausführungsbeispiel in automatischer Weise nur auf einem Teil des maximalen Stellwegs des Aufnehmers 20, nämlich soweit eine Verstellung während des Betriebs erforderlich ist. Wenn der Aufnehmer 20 in die Transportstellung angehoben werden soll, erfolgt dies, indem die Stellvorrichtung 34 ausgefahren wird und der Aufnehmer 20 auf dem Anschlag 52 aufsitzt; alternativ kann ein nicht gezeigter Stellmotor zwischen dem Aufnehmer 20 und dem Rahmen 12 vorgesehen werden, der den Aufnehmer 20 für den Transport vollkommen anhebt.

Die Steuervorrichtung 36 ist vorteilhafterweise teilweise auf der Presse 10 und teilweise auf dem Zugfahrzeug 22 vorgesehen. In einer abgewandelten Bauweise kann sich die Steuervorrichtung 36 auch auf der Presse 10 alleine befinden und von dem Zugfahrzeug 22 ferngesteuert werden; sie kann elektrisch, elektronisch, in CAN-Bus-Technik oder auf andere Weise ausgebildet werden.

Der Sensor 38 ist in dem dargestellten Ausführungsbeispiel als ein berührungsloser Sensor 38 ausgebildet, der an dem Rahmen 12 befestigt ist und Wellen im Hochfrequenz- oder Ultraschallbereich zum einem Referenzteil an dem Aufnehmer 20 sendet und deren Reflektionsverhalten heranzieht, um die zurückgelegte Wegstrecke zu berechnen und daraus ein Signal für den Abstand des Aufnehmers 20 gegenüber dem Rahmen 12 zu gewinnen. Da der Aufnehmer 20 mittels der Stützelemente 54 auf dem Boden ruht, steht die von dem Sensor 38 ermittelte Abstandsänderung zugleich eine Änderung in der Contour des Bodens im Bereich des Aufnehmers 20 gegenüber dem Rahmen 12 dar.

Gemäß der Darstellung befindet sich der Sensor 38 zwischen dem Aufnehmer 20 und einer nachfolgenden Förderfläche für das aufgenommene Gut; es ist wichtig, dass der Übergang von dem Aufnehmer 20 zu dem nachfolgenden Bauteil bestmöglichst erfolgt, weil geometrische Änderungen in dem Förderweg zu Förderstörungen und Staus führen können. Der Sensor 38 kann aber auch anderenorts untergebracht werden, wo er die relative Stellung zwischen dem Aufnehmer 20 und dem Rahmen 12 erfassen kann und dem Gut nicht ausgesetzt ist.

Der Sensor 38 kann auch als berührungsloser Sensor ausgebildet sein, der auf den Boden gerichtet ist und zwischen benachbarten Bewegungsbahnen der Zinken 30 in dem Aufnehmer 20 befestigt wird. Zudem kann der Sensor 38 stattdessen oder zusätzlich auch vor dem Aufnehmer 20 vorgesehen und von einem nicht näher bezeichneten Arm getragen werden. In nicht dargestellter Weise kann auch ein Sensor in der Form eines Gleitschuhs oder dergleichen vorgesehen werden, der der Bodenkontur folgt.

Wenn mittels des Sensors 38 die Contouränderung des Bodens direkt ermittelt werden soll, können über der Breite des Aufnehmers 20 z.B. drei Sensoren 38 vorgesehen werden, und zwar in den Seitenbereichen und in der Mitte. Die Signalverarbeitungseinheit 40 wählt unter den von den Sensoren 38 gelieferten Signalen dasjenige aus, das den geringsten Abstand zum Boden repräsentiert.

Die Signalverarbeitungseinheit 40 ist in der Art eines Bordcomputers ausgeführt. Gegebenenfalls kann die Signalverarbeitungseinheit 40 auch lösbar und tragbar ausgebildet sein und in einem anderen Gespann verwendet werden. Die Signalverarbeitungseinheit 40 basiert auf Hardware- und/oder Softwarekomponenten; vorzugsweise enthält sie jedoch ein Computerprogramm, das eine Vielzahl von Rechenoperationen und Verknüpfungen ermöglicht. In die Signalverarbeitungseinheit 40 wird Energie von dem Zugfahrzeug 22 eingespeist, die die Rechenvorgänge ermöglicht. Außerdem erhält die Signalverarbeitungseinheit 40 das Signal oder die Signale von dem bzw. den Sensoren 38, so dass der aktuelle Abstand zum Boden bekannt wird bzw. errechnet werden kann. Wenn Signale mehrerer Sensoren 38 zugeführt werden, findet eine Ermittlung des Signals zu dem kleinsten Abstand statt, wobei gegebenenfalls auch ein Zeitglied verwendet werden kann, das verhindert, dass kurzfristige Signaländerungen für vernachlässigbare Konturänderungen unterdrückt werden. Von der Signalverarbeitungseinheit 40 führt eine nicht näher bezeichnete Leitung zu der Stellvorrichtung 34, um dieser ein Signal zum Aus- oder Einfahren zuzuleiten.

Die Eingabeeinheit 42 ist üblicherweise in der Art einer Tastatur ausgebildet und ist dazu geeignet, bestimmte Mindesthöhen oder Betriebszustände einzustellen bzw. einzuleiten. Beispielsweise kann ein mehr oder weniger aggressives Rechen mittels der Zinken 30 eingestellt werden; es können auch obere und untere Grenzen für den Aufnehmer 20 definiert werden, innerhalb deren sich der Aufnehmer 20 bewegen darf, ohne dass eine Korrektur durch die Stellvorrichtung 34 angebracht wäre. Außerdem kann der Aufnehmer 20 in eine Transportstellung angehoben werden. Es ist möglich, die Signalverarbeitungseinheit 40 auf der Presse 10 und die Eingabeeinheit 42 auf dem Zugfahrzeug 22 anzuordnen.

Schließlich ist in Verbindung mit der Signalverarbeitungseinheit 40 eine Deaktivierungsvorrichtung 46 vorgesehen, damit der Aufnehmer 20 z.B. seine Transportstellung einnimmt bzw. einhält. Die Deaktivierungsvorrichtung 46 ist in dem vorliegenden Ausführungsbeispiel als ein Schalter ausgebildet, der ein Signal an die Signalverarbeitungseinheit 40 liefert, an dem diese erkennt, dass der Aufnehmer 20 seine Transportstellung einnimmt bzw. eingenommen hat und nicht mehr aufgrund der Signale der Sensoren 38 verstellt werden soll; dies ist eigentlich nur dann erforderlich, wenn der Sensor 38 den Abstand zwischen dem Rahmen 12 und dem Boden misst.

Nach alledem funktioniert die Erfindung wie folgt.

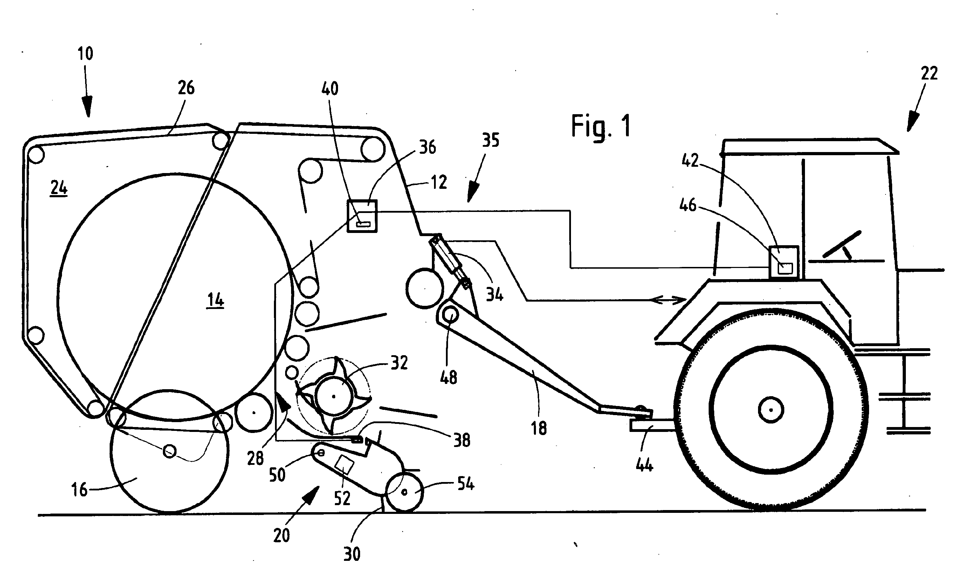

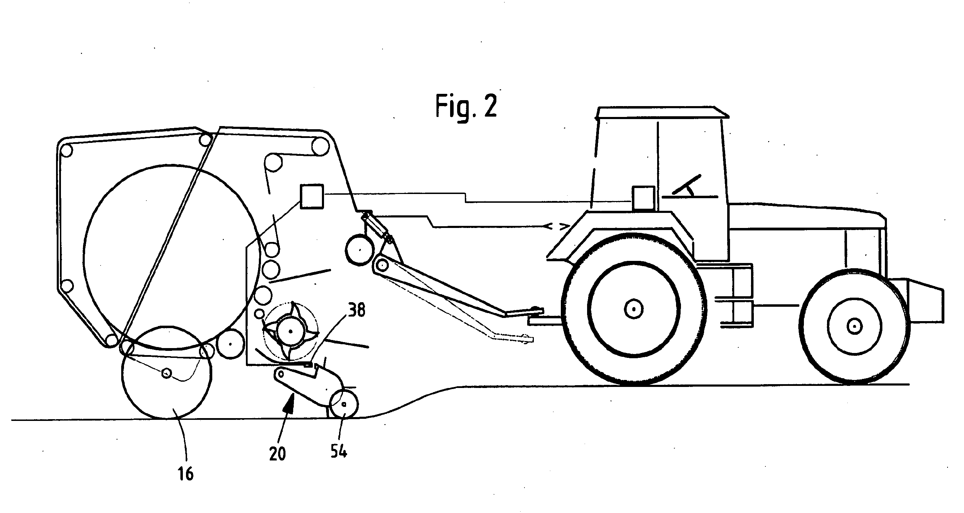

Zum Arbeitseinsatz wird die Presse 10 mit dem Zugfahrzeug 22 auf ein Feld gefahren und in Betrieb gesetzt. Die Signalverarbeitungseinheit 40 wird aktiviert, so dass der Sensor 38 den Abstand zwischen dem Aufnehmer 20 und dem Rahmen 12 ermitteln und die Stellvorrichtung 34 gemäß einer Vorgabe der Eingabeeinheit 42 verstellen kann. Wenn im Weiteren die Presse 10 über das Feld gezogen wird, erkennt der Sensor 38 die Änderungen der Bodenoberfläche aufgrund der Abstützung des Aufnehmers 20 mittels der Stützelemente 54, leitet diese Information an die Signalverarbeitungseinheit 40 weiter, wo sie mit einem Sollwert verglichen wird. Je nach der Richtung der Abweichung wird dann die Stellvorrichtung 34 aus- oder eingefahren, um den Istwert an den Sollwert anzugleichen. Wenn der Aufnehmer 20 in seine Transportstellung angehoben ist, wird die soft- oder hardwaremäßige Rechenoperation seitens der Signalverarbeitungseinheit 40 aufgrund des Signals aus der Deaktivierungsvorrichtung 46 wieder beendet. Der optimale Zustand entspricht dem in Figur 1 gezeigten; ein Korrekturbedarf entsteht in einer Situation, wie sie in Figur 2 gezeigt ist, und in der die Presse 10 auf eine Erhebung zugefahren wird. Eine solche Erhebung kann sich aus einem Erdhaufen, einem Damm für nur kurze Zeit oder aus einer Niveauveränderung ergeben, wie sie sich z.B. zwischen zwei Feldern ergeben könnte.

In der Situation nach Figur 2 befindet sich das Zugfahrzeug 22 bereits auf einem höheren Niveau. Es ist erkennbar, dass sobald sich die Vorder- oder Hinterräder des Zugfahrzeugs 22 auf die Erhebung begeben, sich auch der Bereich des Rahmens 12 zwischen den Rädern 16 und dem Zugfahrzeug 22 anheben wird; da sich der Aufnehmer 20 mittels der Stützelemente 54 auf dem Boden abstützt und nicht mit angehoben wird, ändert sich seine Stellung gegenüber dem stromabwärts folgenden Förderrotor 32. Der Sensor 38 erkennt eine derartige Relativbewegung, meldet diese der Stelleinrichtung 36, in der die Signalverarbeitungseinheit 40 ein Korrektursignal für die Stellvorrichtung 34 erzeugt, was dazu führt, dass diese so lange eingefahren wird, bis die räumliche Beziehung zwischen dem Aufnehmer 20 und dem Förderrotor 32, bzw. - da dieser im Rahmen 12 unveränderlich gelagert ist - dem Rahmen 12 wieder den Vorgaben entspricht. Dieser Zustand ist in Figur 2 wiedergegeben. Die Stelleinrichtung 36 kann sowohl als eine Steuer- als auch als eine Regelvorrichtung ausgebildet sein. Die Abweichung in der Stellung der Deichsel 18 ist in gestrichelten Linien wiedergegeben.

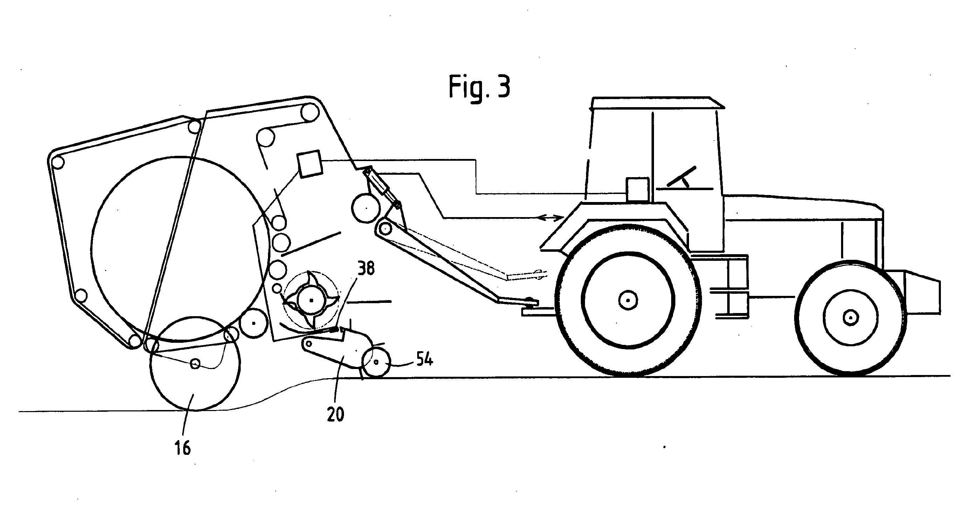

Bei dem Zustand nach Figur 3 hat auch der Aufnehmer 20 die Erhebung bereits erreicht, während sich die Räder 16 der Presse 10 noch in dem tiefer liegenden Bereich befinden. Da der Aufnehmer 20 aufgrund der Stützelemente 54 von der Erhebung angehoben worden ist, was von dem Sensor 38 erkannt wurde, ermittelt die Stelleinrichtung 36, dass die Stellvorrichtung 34 ausgefahren werden muß, um den Aufnehmer 20 auf die neue Höhe zu bringen, bzw. den Abstand an dem Sensor 38 einzuhalten. Vergleichbare Vorgänge spielen sich ab, wenn das Zugfahrzeug 22 bzw. die Presse 10 eine Erhebung verlassen, bzw. nur durch eine Furche, oder dergleichen fahren, in feuchten Boden einsinken, etc. Auch in diesem Fall ist die Abweichung in der Stellung der Deichsel 18 in gestrichelten Linien wiedergegeben.

Nach alledem bleibt das räumliche Verhältnis zwischen dem Aufnehmer 20 und dem nachfolgenden Förderrotor 32 bzw. ihm zugeordneten Förderflächen stets konstant, oder - wenn dies gewünscht ist - innerhalb bestimmter Grenzen erhalten. Die Verstellung erfolgt schnell, weil sie an oder im Umfeld des Aufnehmers 20 abgeleitet wurde, und sie erfolgt ohne großen Kraftaufwand, weil nicht die gesamte Presse 10 angehoben, sondern nur der Stellungswinkel der Deichsel 18 gegenüber dem Rahmen 12 geändert wird.

## Patentansprüche

1. Landwirtschaftliche Presse (10) mit einem Rahmen (12), einer Deichsel (18), einem Aufnehmer (20) und einer Stellvorrichtung (34) zur motorischen Verstellung der Deichsel (18) gegenüber dem Rahmen (12), **gekennzeichnet durch einen** Sensor (38) zum Erfassen von Bodenhöhenänderungen im Bereich des Aufnehmers (20) und **durch eine** Signalverarbeitungsvorrichtung (40) zum Beaufschlagen der Stellvorrichtung (34) abhängig von einem Ausgangssignal des Sensors (38).

2. Landwirtschaftliche Presse nach Anspruch 1, **dadurch gekennzeichnet, dass** der Sensor (38) als berührungsloser Sensor (38) ausgebildet ist.

3. Landwirtschaftliche Presse nach Anspruch 1, **dadurch gekennzeichnet, dass** der Sensor (38) auf den Boden absenkbar ist.

4. Landwirtschaftliche Presse nach einem oder mehreren der vorherigen Ansprüche, **dadurch gekennzeichnet, dass** der Sensor (38) unterhalb des Aufnehmers (20) oder vor diesem vorgesehen ist.

5. Landwirtschaftliche Presse nach einem oder mehreren der vorherigen Ansprüche, **dadurch gekennzeichnet, dass** der Sensor (38) zwischen dem Aufnehmer (20) und dem Rahmen (12) der Presse (10) vorgesehen ist.

6. Landwirtschaftliche Presse nach einem oder mehreren der vorherigen Ansprüche, **dadurch gekennzeichnet, dass** der Sensor (38) ein Potentiometer zum Bestimmen einer relativen Stellung in Bezug auf den Aufnehmer (20) enthält.

7. Landwirtschaftliche Presse nach einem oder mehreren der vorherigen Ansprüche, **dadurch gekennzeichnet, dass** über die Breite des Aufnehmers (20) mehrere Sensoren (38) vorgesehen sind.

8. Landwirtschaftliche Presse nach einem oder mehreren der vorherigen Ansprüche, **dadurch gekennzeichnet, dass** die Stellvorrichtung (34) elektrisch oder hydraulisch betrieben wird.

9. Landwirtschaftliche Presse nach einem oder mehreren der vorherigen Ansprüche, **dadurch gekennzeichnet, dass** die Signalverarbeitungsvorrichtung (40) erst nach Überschreiten eines vorzugsweise verstellbaren unteren und/oberen Grenzwertes ein Signal an die Stellvorrichtung (34) aussendet.

10. Landwirtschaftliche Presse nach einem oder mehreren der vorherigen Ansprüche, **dadurch gekennzeichnet, dass** die Stellvorrichtung (34) nur in einer Richtung motorisch verstellbar ist.

11. Landwirtschaftliche Presse nach einem oder mehreren der vorherigen Ansprüche, **dadurch gekennzeichnet, dass** der Aufnehmer (20) quer zu der Fahrtrichtung der Presse (10) um eine im Wesentlichen horizontale Achse schwenkbar ist.

12. Landwirtschaftliche Presse nach einem oder mehreren der vorherigen Ansprüche 1 bis 10, **dadurch gekennzeichnet, dass** der Aufnehmer (20) starr an der Presse (10) angeordnet ist.

13. Landwirtschaftliche Presse nach einem oder mehreren der vorherigen Ansprüche, **gekennzeichnet durch** eine Deaktivierungsvorrichtung (46) zum Deaktivieren der Signalverarbeitungsvorrichtung (40).

## Claims

1. Agricultural baler (10), with a frame (12), a drawbar (18), a pick-up (20) and an adjusting device (34) for the motorized adjustment of the drawbar (18) in relation to the frame (12), **characterized by** a sensor (38) for detecting changes in the ground height in the region of the pick-up (20), and by a signal processing device (40) for acting upon the adjusting device (34) as a function of an output signal from the sensor (38).

2. Agricultural baler according to Claim 1, **characterized in that** the sensor (38) is designed as a contactless sensor (38).

3. Agricultural baler according to Claim 1, **characterized in that** the sensor (38) can be lowered onto the ground.

4. Agricultural baler according to one or more of the preceding claims, **characterized in that** the sensor (38) is provided below the pick-up (20) or in front of it.

5. Agricultural baler according to one or more of the preceding claims, **characterized in that** the sensor (38) is provided between the pick-up (20) and the frame (12) of the baler (10).

6. Agricultural baler according to one or more of the preceding claims, **characterized in that** the sensor (38) contains a potentiometer for determining a relative position with respect to the pick-up (20).

7. Agricultural baler according to one or more of the preceding claims, **characterized in that** a plurality of sensors (38) are provided over the width of the pick-up (20).

8. Agricultural baler according to one or more of the preceding claims, **characterized in that** the adjusting device (34) is operated electrically or hydraulically.

9. Agricultural baler according to one or more of the preceding claims, **characterized in that** the signal processing device (40) transmits a signal to the adjusting device (34) only after a preferably adjustable lower and/or upper limit value is exceeded.

10. Agricultural baler according to one or more of the preceding claims, **characterized in that** the adjusting device (34) can be adjusted by motor only in one direction.

11. Agricultural baler according to one or more of the preceding claims, **characterized in that** the pick-up (20) can be pivoted transversely with respect to the direction of travel of the baler (10) about a substantially horizontal axis.

12. Agricultural baler according to one or more of the preceding claims 1 to 10, **characterized in that** the pick-up (20) is arranged rigidly on the baler (10).

13. Agricultural baler according to one or more of the preceding claims, **characterized by** a deactivation device (46) for deactivating the signal processing device (40).

## Revendications

1. Presse agricole (10) comprenant un châssis (12), un timon (18), un dispositif récepteur (20) et un appareil de commande (34) pour le déplacement motorisé du timon (18) par rapport au châssis (12), **caractérisée par** un capteur (38) permettant de détecter des variations de hauteur au sol dans la région du dispositif récepteur (20) et par un appareil de traitement des signaux (40) permettant d'activer l'appareil de commande (34) en fonction d'un signal de sortie du capteur (38).

2. Presse agricole selon la revendication 1, **caractérisée en ce que** le capteur (38) est réalisé sous forme de capteur (38) sans contact.

3. Presse agricole selon la revendication 1, **caractérisée en ce que** le capteur (38) peut être abaissé sur le sol.

4. Presse agricole selon l'une quelconque ou plusieurs des revendications précédentes, **caractérisée en ce que** le capteur (38) est prévu sous le dispositif récepteur (20) ou avant celui-ci .

5. Presse agricole selon l'une quelconque ou plusieurs des revendications précédentes, **caractérisée en ce que** le capteur (38) est prévu entre le dispositif récepteur (20) et le châssis (12) de la presse (10).

6. Presse agricole selon l'une quelconque ou plusieurs des revendications précédentes, **caractérisée en ce que** le capteur (38) comprend un potentiomètre pour déterminer une position relative par rapport au dispositif récepteur (20).

7. Presse agricole selon l'une quelconque ou plusieurs des revendications précédentes, **caractérisée en ce que** plusieurs capteurs (38) sont prévus sur la largeur du dispositif récepteur (20) .

8. Presse agricole selon l'une quelconque ou plusieurs des revendications précédentes, **caractérisée en ce que** l'appareil de commande (34) est actionné électriquement ou hydrauliquement.

9. Presse agricole selon l'une quelconque ou plusieurs des revendications précédentes, **caractérisée en ce que** l'appareil de traitement des signaux (40) n'envoie un signal à l'appareil de commande (34) que si une valeur limite inférieure et/ou supérieure, de préférence ajustable, est dépassée.

10. Presse agricole selon l'une quelconque ou plusieurs des revendications précédentes, **caractérisée en ce que** l'appareil de commande (34) ne peut être déplacé par moteur que dans une seule direction.

11. Presse agricole selon l'une quelconque ou plusieurs des revendications précédentes, **caractérisée en ce que** le dispositif récepteur (20) peut pivoter transversalement à la direction de conduite de la presse (10) autour d'un axe essentiellement horizontal.

12. Presse agricole selon l'une quelconque ou plusieurs des revendications précédentes 1 à 10, **caractérisée en ce que** le dispositif récepteur (20) est disposé rigidement sur la presse (10).

13. Presse agricole selon l'une quelconque ou plusieurs des revendications précédentes, **caractérisée par** un appareil de désactivation (46) permettant de désactiver l'appareil de traitement des signaux (40).
